(19) Europäisches Patentamt / European Patent Office / Office européen des brevets

(11) **EP 4 419 856 B1**

(12) **FASCICULE DE BREVET EUROPEEN**

(45) Date de publication et mention de la délivrance du brevet:
**24.12.2025 Bulletin 2025/52**

(21) Numéro de dépôt: **22802089.7**

(22) Date de dépôt: **12.10.2022**

(51) Classification Internationale des Brevets (IPC):
**F28D 15/04** *(2006.01)*

(52) Classification Coopérative des Brevets (CPC):
**F28D 15/0233; F28D 15/04; F28D 15/043;**
B64G 1/506; F28D 2021/0021

(86) Numéro de dépôt international:
**PCT/EP2022/078385**

(87) Numéro de publication internationale:
**WO 2023/066754 (27.04.2023 Gazette 2023/17)**

(54) **CALODUC DE TYPE À POMPAGE CAPILLAIRE AVEC RAINURES RÉENTRANTES À LIMITES D'ÉBULLITION ET CAPILLAIRE AUGMENTÉES**

KAPILLARGEPUMPTES WÄRMEROHR MIT WIEDEREINTRITTSRILLEN MIT ERHÖHTEN SIEDE- UND KAPILLARGRENZEN

CAPILLARY-PUMPED-TYPE HEAT PIPE WITH RE-ENTRANT GROOVES, HAVING INCREASED BOILING AND CAPILLARY LIMITS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.10.2021 FR 2111008**

(43) Date de publication de la demande:
**28.08.2024 Bulletin 2024/35**

(73) Titulaires:
• **Commissariat à l'Energie Atomique et aux Energies Alternatives**
  **75015 Paris (FR)**
• **Airbus Defence and Space SAS**
  **31402 Toulouse (FR)**

(72) Inventeurs:
• **MARIOTTO, Mathieu**
  **38054 GRENOBLE (FR)**
• **CHAMPEL, Bénédicte**
  **38054 GRENOBLE (FR)**
• **GRUSS, Jean-Antoine**
  **38170 SEYSSINET (FR)**
• **CLAUDET, Vincent**
  **31402 TOULOUSE (FR)**

(74) Mandataire: **Ipsilon**
  **12 Avenue d'Italie**
  **75013 Paris (FR)**

(56) Documents cités:
EP-A1- 3 553 445     US-A- 4 602 679
US-A1- 2005 022 978     US-A1- 2019 293 362

## Description

### Domaine technique

La présente invention concerne un caloduc à pompage capillaire à rainures réentrantes.

La présente invention vise à améliorer les limites d'ébullition et capillaire d'un tel caloduc.

### Technique antérieure

Un caloduc comporte une enceinte hermétiquement close, un fluide de travail et un réseau capillaire. Lors de la fabrication, tout l'air présent dans le tube caloduc est évacué et on introduit une quantité de liquide pur permettant de saturer le réseau capillaire. Il y a alors établissement d'un équilibre entre la phase liquide et la phase vapeur.

Sous l'effet d'une source chaude appliquée dans une zone à l'une des extrémités longitudinales, désignée évaporateur, le liquide se vaporise en induisant une légère surpression qui provoque le mouvement de la vapeur vers une zone à l'autre extrémité longitudinale, désignée condenseur. Au condenseur, la vapeur se condense et repasse en phase liquide. Le fluide condensé circule dans le réseau capillaire et revient vers l'évaporateur sous l'effet de forces capillaires, lorsque le caloduc n'est pas soumis à la gravité. Le retour du fluide liquide du condenseur à l'évaporateur est obtenu par pompage capillaire.

Les caloducs à rainures fonctionnent sur le principe du pompage capillaire. Ils comportent un tube, dans lequel la surface intérieure comporte des rainures axiales/longitudinales [1] ou légèrement en forme de spirale. Les caloducs à rainures comportent un cœur vapeur et un réseau capillaire dans lequel circule la phase liquide. Du fait d'une variation de courbure de l'interface liquide-vapeur- entre la zone condenseur et la zone évaporateur, un gradient de pression apparaît dans le liquide, qui mène à une variation de pression capillaire. Plus la largeur des rainures est petite, plus l'effet de pompage capillaire est important.

Par ailleurs, des rainures profondes permettent d'obtenir une section de passage pour le retour liquide grande, et donc de minimiser la perte de pression.

La puissance maximale que peuvent transporter des caloducs à rainures est généralement fixée par la limite capillaire dont le terme moteur est la pression capillaire, et le terme limitant essentiellement la perte de pression liquide dans les rainures et, dans une moindre mesure les pertes de charge de l'écoulement vapeur.

Les caloducs à rainures réentrantes sont des exemples particuliers de caloducs à rainures, dans lesquels les rainures présentent un canal de liaison étroit par rapport au reste de la rainure, ce qui permet d'augmenter l'effet de pompage capillaire tout en limitant les pertes de charge. Ces caloducs sont utilisés principalement dans le domaine spatial, par exemple pour la régulation thermique dans les satellites et/ou les engins spatiaux.

Les techniques de réalisation connues des caloducs à rainures, et notamment des caloducs à rainures réentrantes, ne permettent pas d'obtenir des rainures ayant une profondeur sensiblement plus grande que leur largeur.

Ces caloducs sont réalisés essentiellement par extrusion. Avec une telle technique, le rapport profondeur sur largeur de rainures rectangulaires est de l'ordre de 1.

Dans le cas des rainures réentrantes, les contraintes de fabrication sont encore plus draconiennes, limitant la largeur, la longueur du rétrécissement et la section de la partie réentrante.

Une autre technique utilise l'usinage mécanique, avec cette technique également le rapport profondeur sur largeur n'est pas sensiblement supérieur à 1. En outre, cette technique a un prix de revient relativement élevé et n'est pas adaptée à la fabrication en moyenne et grande série.

Une autre technique utilise la gravure chimique. Mais elle ne permet pas non plus d'avoir un rapport profondeur sur largeur important.

Pour pallier ces inconvénients, la demanderesse a proposé dans la demande de brevet EP3553445A1 un caloduc réalisé par empilement de plaques solidarisées entre elles avec étanchéité, dont les plaques d'extrémité formant des plaques de fermeture et les plaques intercalaires sont structurées, de sorte que leur empilement délimite des rainures réentrantes s'étendant sur toute la longueur du caloduc. Les plaques peuvent être assemblées par différentes techniques de soudure, brasure ou collage.

Sur la plage de températures de fonctionnement d'un caloduc, différentes limites physiques peuvent limiter ses performances. La courbe de fonctionnement du caloduc, qui permet de connaitre sa capacité de transport maximum, est obtenue par la réunion des courbes correspondant aux différentes limites physiques de fonctionnement qui définissent au final le domaine de fonctionnement du caloduc en termes de puissance maximale qu'il peut transférer.

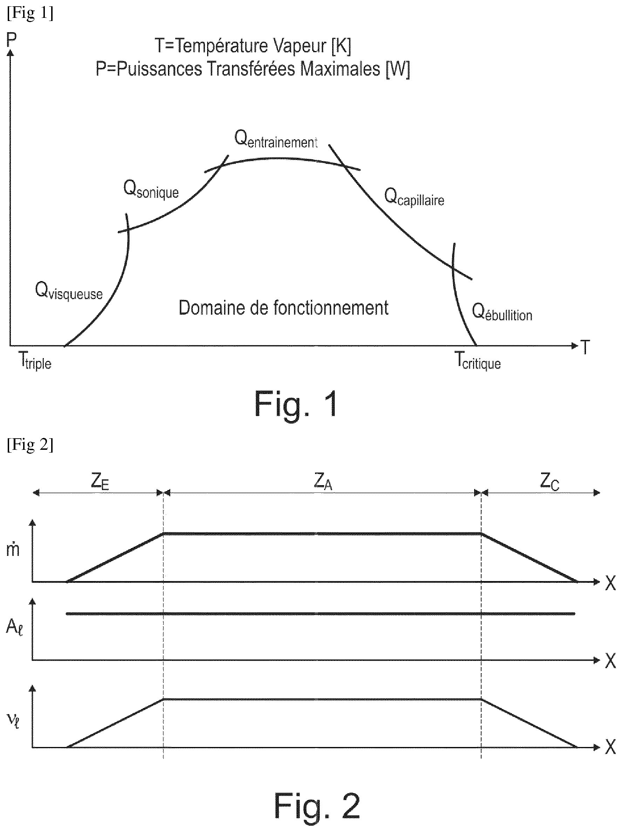

La figure 1 illustre la courbe délimitant le domaine de fonctionnement pour un exemple de caloduc à pompage capillaire. Sur cette figure 1, on rappelle que les portions de courbe Qvisqueuse, Qsonique, Qentraînement, $Q_{capillaire}$, Qébullition, définissent respectivement les limites visqueuse, sonique, d'entraînement, capillaire et d'ébullition.

Dans le cadre de l'invention, les inventeurs se sont intéressés plus spécifiquement aux deux dernières nommées.

Dans un caloduc à pompage capillaire, la pression motrice capillaire doit compenser les pertes de charge statiques liées aux forces de volume et dynamiques générées par l'écoulement du fluide de travail du caloduc (frottements entre les écoulements et les parois). Cette pression motrice capillaire, qui correspond à la différence de pression capillaire entre l'évaporateur et le condenseur, est fonction de la structure du caloduc, et les pertes de charge dynamiques sont croissantes avec le débit massique du fluide de travail (et avec la longueur du caloduc) : la limite capillaire est atteinte lorsque la pression motrice capillaire est égale à la somme des pertes de charges. Autrement dit, un caloduc ne fonctionne que si la pression motrice capillaire est supérieure, en conditions de microgravité, aux pertes de charge, et donc en dessous de la limite capillaire.

Cette limite s'exprime généralement en W.m : elle est inversement proportionnelle à la longueur efficace du caloduc, c'est-à-dire que pour un même design (même section transversale sur toute la longueur), la limite capillaire, exprimée en W, d'un caloduc de 2 mètres est la moitié de celle d'un caloduc de 1 mètre.

Les pertes de charge par frottement dans un écoulement s'expriment par l'équation de Darcy-Weisbach comme suit :

[Equation 1]

$$\frac{dP}{dz} = f\,\frac{1}{D_h}\,\rho\,\frac{v^2}{2}$$

dans laquelle :

f est le coefficient de perte de charge (dépendant du régime d'écoulement du fluide, et que l'on peut déterminer via le nombre de Reynolds à partir de corrélations),
v la vitesse du fluide de travail (proportionnelle à la puissance thermique à transporter),
$\rho$ la masse volumique du fluide de travail et
Dh le diamètre hydraulique.

Le diamètre hydraulique est lui-même défini par l'équation suivante:

[Equation 2]

$$D_h = \frac{4\,S}{P_m}$$

avec S la section du fluide et Pm le périmètre mouillé.

On comprend donc que pour maximiser la limite capillaire, il faut privilégier des canaux de liquide et de vapeur de section élevée, afin de minimiser les vitesses de fluides dans ces canaux sans réduire le débit, qui est proportionnel à la puissance thermique transférée dans le caloduc.

Il est également nécessaire d'avoir une largeur de rainure à l'interface faible, afin d'avoir une pression capillaire élevée. Mais cette largeur de rainure ne peut être trop faible pour être réalisable technologiquement par une opération de brasure selon le procédé de la demande EP3553445A1. En effet, une largeur trop faible induirait un risque de bouchage par la brasure. Par ailleurs, le rapport des sections entre le canal et la rainure ne doit pas être trop élevé, afin de faciliter l'évacuation des bulles de vapeur pouvant éventuellement apparaitre dans les canaux.

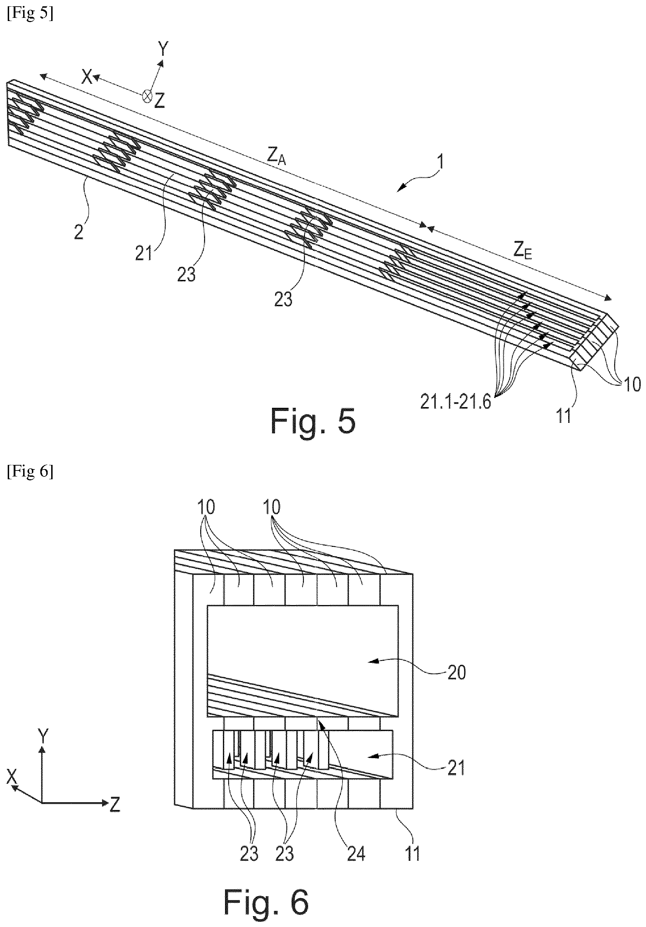

Les approches initiales pour améliorer la limite capillaire se sont beaucoup concentrées sur des modifications géométriques : voir par exemple la publication [2]. Comme l'ont remarqué les auteurs de cette publication, la forme des rainures qui optimise la limite capillaire est caractérisée par une résistance thermique élevée : la figure 6 de cette publication montre qu'augmenter la limite capillaire a pour conséquence d'augmenter la résistance totale du caloduc.

Dans la très grande majorité des cas, les recherches de géométrie optimales sont effectuées avec une géométrie constante sur toute la longueur du caloduc.

On peut néanmoins citer la publication [3] qui décrit des rainures de section rectangulaire avec une ouverture décroissante du condenseur vers l'évaporateur, afin de trouver un compromis entre limite capillaire et pertes de charge.

On peut également citer la publication [4] qui s'intéresse à des rainures triangulaires reliées entre elles par des parois incurvées tangentielles à un cercle de diamètre décroissant du condenseur à l'évaporateur, l'angle des rainures étant également décroissant du condenseur à l'évaporateur, et ce tout comme la publication [3], afin d'obtenir un compromis entre pertes de charge et limite capillaire.

Plus récemment, on peut noter un axe de recherche qui se focalise sur la modification de l'état de surface des rainures, notamment pour modifier la mouillabilité de la paroi, effet qui a été mis en évidence par les auteurs de la publication [5]. On peut citer, ici la publication [6] qui met en œuvre de l'eau à l'échelle nano-fluidique comme fluide de travail, la publication [7] qui concerne un traitement de surface pour obtenir une mouillabilité variable de l'évaporateur au condenseur, et la publication [8] qui décrit l'ajout de micro-piliers dans les canaux.

La limite d'ébullition a pour origine la naissance de bulles de vapeur au sein du réseau capillaire, lorsque la densité de flux thermique radial à l'évaporateur devient trop importante. Ainsi si la densité de flux radial est trop grande, la circulation du liquide dans la structure capillaire peut être affectée par l'apparition de bulles ce qui perturbe l'hydrodynamique du caloduc, et in fine son fonctionnement et/ou ses performances.

La limite d'ébullition s'exprime généralement en $W.m^2$: elle est proportionnelle à la surface de l'évaporateur du caloduc, c'est-à-dire que pour un même design (même section transversale sur toute la longueur de l'évaporateur), la limite d'ébullition, exprimée en W, d'un caloduc dont l'évaporateur est de 10 centimètres est la moitié de celle d'un évaporateur de 20 centimètres.

La puissance thermique maximum avant l'apparition de la limite d'ébullition est donnée par l'équation suivante :

[Equation 3]

$$Q_{ébullition} = G_{eq}\Delta T_{surchauffe}$$

avec Geq qui est la conductance équivalente au niveau de l'évaporateur (en W/K), et ∆Tsurchauffe, le gradient de température entre la paroi et la température vapeur nécessaire à l'apparition d'une bulle (en K).

Par la relation de Clausius-Clapeyron, on peut relier ∆Tsurchauffe au rayon des bulles :

[Equation 4]

$$\Delta T_{surchauffe} = \frac{\sigma_l T_v}{\rho_v h_{lv}}\left(\frac{1}{R_b} - \frac{1}{R}\right)$$

Pour repousser la limite d'ébullition, on peut augmenter donc la conductance à l'évaporateur, ou augmenter la surchauffe, notamment en modifiant l'état de surface des canaux liquides, afin de diminuer le rayon de bulles. Pour cela, on peut diminuer les rugosités des canaux, ce qui peut par exemple être fait en réalisant un polissage électrolytique des tôles avant ou après usinage.

On peut aussi augmenter le rayon du ménisque de l'interface liquide/vapeur mais cela est contre-productif pour les forces de pompage capillaire.

En outre, il a été observé que dans des configurations d'écoulement bouillant, augmenter la vitesse de l'écoulement permet de repousser le début de la nucléation : voir par exemple [9], [10].

Si l'on suppose que la densité de flux est homogène au niveau de l'évaporateur, le débit massique de liquide augmente linéairement entre l'extrémité de l'évaporateur du caloduc, où elle est nulle, et la partie adiabatique où elle atteint sa valeur maximale.

Dans les caloducs de l'état de l'art, la section des canaux liquide étant constante, la vitesse de liquide suit la même évolution : il y a donc en extrémité longitudinale du caloduc une région de faible vitesse, dans laquelle l'ébullition peut arriver plus tôt que dans le reste de l'évaporateur. Cela est montré sur la figure 2 dans laquelle E, A, C, désignent respectivement les zones évaporateur, adiabatique et condenseur d'un caloduc, ṁ est le débit massique de fluide de travail, proportionnel à la puissance reçue suivant la longueur axiale X, $A_1$ est la section de passage du fluide suivant l'axe X du caloduc, et $V_1$ est la vitesse locale de fraction du fluide suivant l'axe X.

Dans le cas de caloducs rainurés, les axes de recherche identifiés par les inventeurs, pour améliorer la limite d'ébullition, se focalisent sur la modification des caractéristiques de la nucléation à l'évaporateur, notamment par l'utilisation de nano-fluides avec de l'eau comme fluide de travail: [11] ou par l'utilisation de fluides dits remouillants, c'est-à-dire des fluides dont la tension de surface augmente avec la température : [12].

Par conséquent, il existe un besoin pour améliorer encore les caloducs à rainures, plus particulièrement les caloducs à rainures réentrantes, et ce afin d'en optimiser le fonctionnement, d'améliorer leurs performances et d'étendre leurs domaines de fonctionnement, plus particulièrement d'augmenter les limites capillaire et/ou d'ébullition.

Le but général de l'invention est alors de répondre au moins en partie à ce besoin.

**Exposé de l'invention**

Pour ce faire, l'invention a tout d'abord pour objet un caloduc à rainures réentrantes, s'étendant le long d'une première direction longitudinale (X), comprenant une enceinte étanche s'étendant entre une première extrémité longitudinale, destinée à être échauffée par une source chaude pour former, au sein de l'enceinte, un évaporateur et une deuxième extrémité longitudinale destinée à être refroidie par une source froide pour former, au sein de l'enceinte, un condenseur, l'enceinte étanche délimitant une zone adiabatique entre l'évaporateur et le condenseur, l'enceinte comprenant un empilement de plaques selon une deuxième direction (Z) orthogonale à la première direction (X), l'empilement comprenant deux plaques de fermeture, au moins un nombre de n modules les uns sur les autres avec n étant un entier >1, chaque module comprenant au moins une plaque intercalaire entre les plaques de fermeture, la ou les plaques intercalaires comprenant au moins une première plaque intercalaire comportant au moins une fenêtre dont les bords délimitent en partie un canal vapeur s'étendant le long de la première direction (X) entre l'évaporateur et le condenseur, dans lequel la vapeur est destinée à circuler, et sur au moins un côté latéral de la fenêtre selon une troisième direction (Y) orthogonale aux première (X) et deuxième (Z) directions, au moins une structuration dont les bords délimitent en partie un canal liquide dans l'évaporateur et le condenseur, au moins une plaque intercalaire comportant au moins une fenêtre dont les bords délimitent en partie le canal vapeur, au moins la première plaque intercalaire délimitant un canal de liaison reliant le canal vapeur et le canal liquide au moins dans l'évaporateur et le condenseur.

Selon l'invention, les structurations et plaques intercalaires des n modules définissent un canal vapeur unique et sur au moins un côté latéral du canal vapeur, n canaux liquides dans l'évaporateur et le condenseur mais un nombre de canal(ux) liquide(s) inférieur à n dans la zone adiabatique.

De préférence, un unique canal liquide est défini dans la zone adiabatique.

Selon un mode de réalisation avantageux, le caloduc comprend des montants qui s'étendent dans la deuxième direction (Y) sur toute la hauteur du ou des canaux liquides dans la zone adiabatique (A), de sorte à constituer des piliers raidisseurs.

Selon un autre mode de réalisation avantageux, le caloduc comprend un nombre de canal(ux) de liaison inférieur à n dans la zone adiabatique ($Z_A$). De préférence, aucun canal de liaison n'étant délimité dans la zone adiabatique. Autrement dit, il n'y a aucune zone d'échange entre le canal vapeur et le(s) canal(ux) liquide(s) dans la zone adiabatique. On précise qu'il va de soi qu'au sens strict, il n'y a pas de zone d'interface liquide-vapeur où peut se former un ménisque d'interface résultant de la dimension caractéristique de l'interface, de la tension de vapeur du fluide et de l'angle de contact avec le matériau utilisé.

Selon une variante avantageuse, les structurations sont seulement d'un côté latéral de la fenêtre délimitant le canal vapeur.

De manière alternative, les structurations peuvent être sur chacun des deux côtés latéraux de la fenêtre, en regard l'un de l'autre.

Avantageusement, la section transversale dans un plan YZ du canal vapeur, de préférence rectangulaire, est constante sur toute la longueur X du caloduc.

Selon une autre variante de réalisation avantageuse, les parois entre canaux liquides sont d'épaisseur progressivement augmentée dans l'évaporateur, depuis la zone adiabatique. Selon encore une autre variante de réalisation avantageuse, les canaux de liaison ont une hauteur selon la direction Y progressivement augmentée dans l'évaporateur.

Selon encore une autre variante de réalisation avantageuse, les parois entre canaux liquides sont d'épaisseur progressivement augmentée dans le condenseur, depuis la zone adiabatique.

L'invention a également pour objet un système comprenant :

- une source froide (SF) ;
- une source chaude (SC) et
- au moins un caloduc à rainures réentrantes tel que décrit précédemment, le caloduc étant agencé de sorte que le flux de chaleur de la source chaude (SC) sur l'évaporateur, et l'extraction de chaleur au condenseur vers la source froide (SF) étant sur au moins une face latérale de l'enceinte en regard des canaux liquides, ou sur une face latérale perpendiculaire à ceux-ci.

Ainsi, l'invention consiste essentiellement à proposer un caloduc à rainures réentrantes, qui contrairement aux caloducs selon l'état de l'art à section transversale interne identique sur toute la longueur du caloduc, présente des designs spécifiques de section transversale interne différentiée selon les différentes zones du caloduc (évaporateur, zone adiabatique, condenseur), afin de répondre plus finement aux problématiques de chacune de ces zones, et ainsi d'optimiser le fonctionnement du caloduc, améliorer ses performances et étendre son domaine de fonctionnement (limites).

En premier lieu, la suppression partielle ou totale des parois entre canaux liquides dans la zone adiabatique pour laisser un nombre de canaux liquides réduits, de préférence un unique canal, par rapport aux canaux liquides de l'évaporateur et du condenseur permet d'augmenter significativement la limite capillaire du caloduc.

Le fait de disposer les canaux liquides sur un seul côté latéral du caloduc permet également d'obtenir un gain substantiel sur la limite capillaire.

En outre, l'épaississement des parois entre canaux liquides dans l'évaporateur, dégrade un peu la limite capillaire, mais a l'avantage de repousser la limite d'ébullition et d'améliorer la conductance du caloduc au niveau de l'évaporateur, et donc la conductance totale, en améliorant le chemin thermique entre source chaude et fluide.

Les inventeurs de la présente invention ont analysé qu'avec la réalisation des caloducs à rainures réentrantes selon la demande de brevet EP3553445, qui consiste à empiler puis assembler entre elles des plaques métalliques poinçonnées ou usinées pour définir les différents canaux de caloduc, ils pouvaient différencier les sections transversales en fonction des zones (évaporateur, zone adiabatique, condenseur) pour augmenter les limites capillaire et d'ébullition.

L'invention apporte de nombreux avantages parmi lesquels on peut citer ceux par rapport à la demande de brevet EP3553445, comme suit:

- gain sur la capacité de transport du caloduc par augmentation de la limite capillaire, et également de de la limite d'ébullition,
- augmentation de la conductance thermique du caloduc,
- augmentation de la résistance à la pression du caloduc en réduisant voire de préférence en supprimant les canaux de liaison au niveau de la zone adiabatique. Ceci permet de diminuer les épaisseurs périphériques, et donc soit de gagner sur la masse et l'encombrement à performances identiques, soit d'améliorer les performances à masse et encombrement identique.

Etant donné que les trois zones d'un caloduc selon l'invention (évaporateur, zone adiabatique, condenseur) n'ont pas la même section transversale interne, des caloducs différents devront être réalisés pour deux applications dont les longueurs des trois zones diffèrent, ce qui n'est pas favorable d'un point de vue coût de réalisation. Mais, dans le cas de systèmes embarqués, plus particulièrement dans le domaine spatial, ce désavantage est compensé par de meilleures performances.

D'autres avantages et caractéristiques ressortiront mieux à la lecture de la description détaillée, faite à titre illustratif et non limitatif, en référence aux figures suivantes.

**Brève description des dessins**

[Fig 1] la figure 1 illustre la courbe délimitant le domaine de fonctionnement pour un exemple de caloduc à pompage capillaire.

[Fig 2] la figure 2 illustre sous forme de courbes le débit massique et la vitesse d'un fluide de travail suivant l'axe longitudinal X au sein d'un caloduc selon l'état de l'art à section de passage du fluide constante selon cet axe X.

[Fig 3] la figure 3 est une vue schématique de côté d'un exemple de caloduc à rainures réentrantes selon l'invention.

[Fig 3A] et [Fig 3B] les figures 3A et 3B sont des vues en perspective et en coupe transversale respectivement selon A-A et B-B, de l'évaporateur d'un caloduc à rainures réentrantes selon la figure 3.

[Fig 3C] la figure 3C est une vue en perspective et en coupe transversale selon C-C de la zone adiabatique d'un caloduc à rainures réentrantes selon la figure 3.

[Fig 3D] la figure 3D est une vue en perspective et en coupe transversale selon D-D du condenseur d'un caloduc à rainures réentrantes selon la figure 3.

[Fig 4] la figure 4 illustre sous forme de courbes la meilleure limite capillaire obtenue pour un caloduc à rainures réentrantes selon l'invention à six canaux liquides de section constante dans les condenseur et évaporateur, comparativement à un caloduc à rainures réentrantes selon l'état de l'art à douze canaux liquides de section constante sur toute la longueur du caloduc.

[Fig 5] la figure 5 est une vue en perspective et en coupe longitudinale de la zone adiabatique et de l'évaporateur d'un caloduc selon l'invention à six canaux liquides dans les condenseur et évaporateur.

[Fig 6] la figure 6 est une vue en perspective et en coupe transversale de la zone adiabatique d'un caloduc selon l'invention à unique canal liquide dans la zone adiabatique.

[Fig 7] la figure 7 illustre sous forme de courbes, les meilleures limites capillaires obtenues pour un caloduc à rainures réentrantes selon l'invention à six canaux liquides dans les condenseur et évaporateur et pour le même caloduc avec en outre un unique canal liquide dans la zone adiabatique, comparativement à un caloduc à rainures réentrantes selon l'état de l'art à douze canaux liquides de section constante sur toute la longueur du caloduc.

[Fig 8A] et [Fig 8B] les figures 8A et 8B sont des vues en perspective et en coupe transversale de l'évaporateur d'un caloduc à rainures réentrantes selon l'invention, ces figures montrant la diminution de la largeur des parois séparant les canaux liquides depuis l'extrémité du caloduc jusque vers la zone adiabatique.

[Fig 9] la figure 9 illustre sous forme de courbes, les meilleures limites capillaires obtenues pour un caloduc à rainures réentrantes selon l'invention à six canaux liquides dans les condenseur et évaporateur et pour le même caloduc avec en outre un unique canal liquide dans la zone adiabatique et parois épaissies dans l'évaporateur et le condenseur, comparativement à un caloduc à rainures réentrantes selon l'état de l'art à douze canaux liquides de section constante sur toute la longueur du caloduc.

[Fig 10] la figure 10 illustre, en vue en perspective et en coupe longitudinale, un autre mode de réalisation de caloduc à rainures réentrantes selon l'invention dont chacun des deux côtés latéraux comprend six canaux liquides dans les condenseur et évaporateur.

[Fig 11], [Fig 11A], [Fig 11B], [Fig 12], [Fig 12A], [Fig 12B], [Fig 13], [Fig 13A], [Fig 13B], [Fig 14], [Fig 14A], [Fig 14B], [Fig 15], [Fig 15A], [Fig 15B], [Fig 16], [Fig 16A], [Fig 16B] les figures 11 à 16B illustrent différentes possibilités d'agencement des canaux liquides de l'évaporateur et du condenseur d'un caloduc selon l'invention, relativement aux sources chaude et froide.

## Description détaillée

Les figures 1 et 2 ont déjà été commentées en préambule. Elles ne sont pas détaillées ci-après.
Par souci de clarté, un même élément selon l'art antérieur et l'invention est désigné par la même référence numérique.

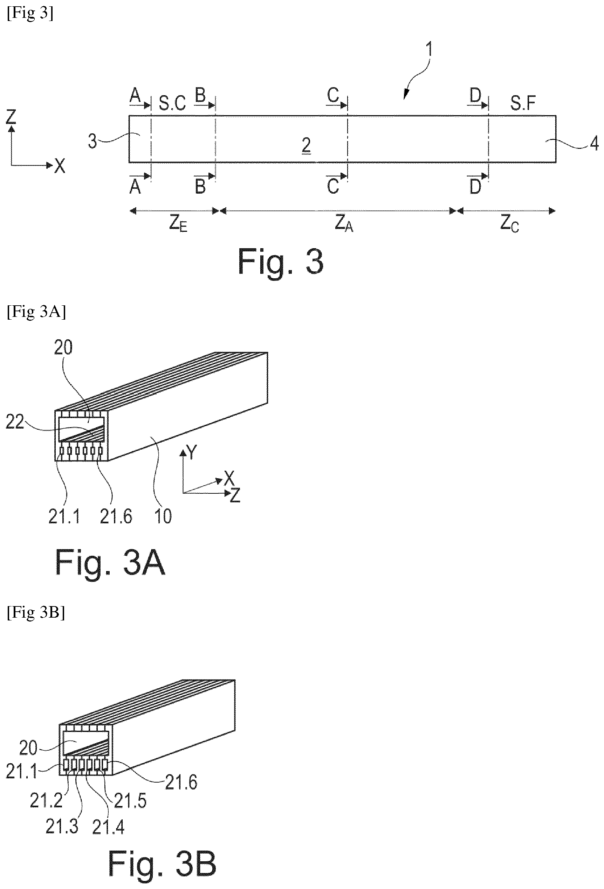

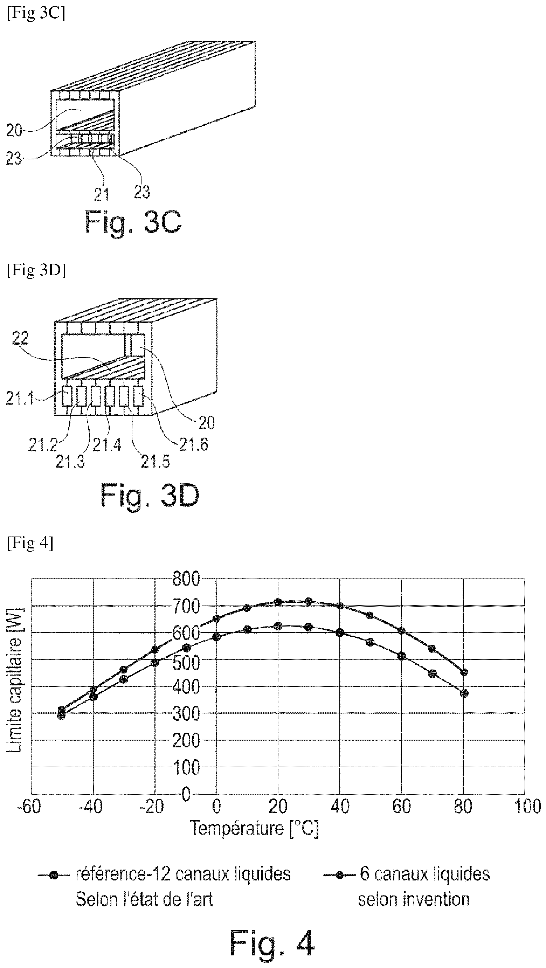

Sur les figures 3 à 3D, on peut voir un exemple de caloduc 1 à pompage capillaire à rainures réentrantes selon l'invention.
Sur la figure 3, l'exemple de caloduc 1 à pompage capillaire s'étendant selon un axe longitudinal X est vu de l'extérieur.
Le caloduc 1 comporte une enceinte étanche 2 s'étendant selon l'axe longitudinal X entre une première extrémité longitudinale 3 et une deuxième extrémité longitudinale 4. La première extrémité 3 est par exemple destinée à être à être échauffée par une source chaude SC pour former au sein de l'enceinte un évaporateur $Z_E$. La deuxième extrémité longitudinale 4 est destinée à être refroidie par une source froide SF pour former au sein de l'enceinte un condenseur Zc.
L'enceinte étanche 2 délimite intérieurement une zone adiabatique $Z_A$ entre l'évaporateur et le condenseur.
La source chaude est par exemple un composant électrique ou électronique, un stockage de chaleur, un réacteur chimique exothermique. La source froide est par exemple une surface radiative, des ailettes en convection forcée, des plaques froides en écoulement mono ou diphasique, un stockage de froid, une réaction chimique endothermique...
L'enceinte étanche 2 est réalisée par empilement et assemblage de plaques d'extrémité et de modules de plaques intercalaires 10 agencés entre les plaques d'extrémité, selon un procédé décrit dans la demande de brevet EP3553445.
Un module comprend au moins deux plaques intercalaires, les plaques des différents modules de plaques intermédiaires 10 comprenant des fenêtres ou d'autres structurations, étant empilées de sorte à délimiter des canaux 20, 21, 22 comme détaillé par la suite. Un module peut aussi comprendre une unique plaque usinée sur ses deux faces principales.
La réalisation, l'empilement et l'assemblage des plaques n'est pas détaillé ici, on pourra se reporter à la demande précitée EP3553445. Néanmoins, les plaques 10 sont préférentiellement en alliage d'aluminium et assemblées par brasure sous vide.
Un mode de réalisation préférentiel consiste à usiner des plaques 10 claddées sur leurs deux faces principales, puis réaliser l'assemblage de ces tôles par brasure eutectique sous vide. A titre de variante, on peut réaliser un usinage sur une seule face principale des plaques claddées.
Pour l'assemblage, différents procédés sont envisageables : brasure au bain de sel, brasure sous gaz inerte, soudage par ultrasons, soudure par friction-malaxage (« Friction Stir Welding » en anglais), collage...
Les dimensions extérieures des caloducs sont comprises entre quelques centimètres et quelques mètres. La taille maximale des caloducs est en général limitée par l'outillage disponible. En effet, l'assemblage des tôles par brasure sous vide requiert des fours sous vide de grande taille, de quelques mètres de longueur.

Pour la découpe et l'usinage des tôles, des machines de grande taille sont également requises. En outre, la tenue mécanique de tôles avec des découpes de faible largeur et de grande longueur est à prendre en compte.

Par exemple, des fenêtres sont réalisées par poinçonnage, découpage, par exemple au laser ou au jet d'eau.

Dans l'exemple illustré, toutes les plaques 10 présentent les mêmes dimensions extérieures, l'empilement définissant l'enceinte étanche 2 est alors de forme parallélépipédique rectangle avec quatre faces longitudinales 11, 12, 13, 14, parallèles au plan XY ou au plan XZ, ayant chacune une grande surface favorisant les échanges de chaleur avec la source chaude SC et la source froide SF.

Selon l'invention, l'empilement de plaques 10 avec leurs fenêtres ou leurs structurations délimite intérieurement un canal dit canal vapeur 20, et comme détaillé par la suite un ou plusieurs canaux dit canaux liquides 21, 21.1 à 21.6 et le cas échéant, un ou des canaux de liaison 22, en fonction de la zone du caloduc.

Plus précisément, le canal vapeur 20 de section transversale rectangulaire constante s'étend le long de l'axe longitudinal X. Le canal vapeur 20 sert à la circulation de la phase vapeur de l'évaporateur $Z_E$ au condenseur Zc en passant par la zone adiabatique $Z_A$.

Un canal liquide 21, 21.1 à 21.6 est relié ou non au canal vapeur 20 en fonction de la zone du caloduc. Lorsqu'il est relié au canal vapeur 20, un canal liquide l'est par un canal de liaison 22 de section dans le plan XZ plus faible que celle du canal liquide. Chaque canal liquide est destiné à la circulation du liquide du condenseur Zc à l'évaporateur $Z_E$.

Un canal de liaison 22 est donc une zone d'échange entre la vapeur et le liquide.

Plus précisément, selon l'invention, le(s) canal(ux) liquide(s) 21, 21.1 à 21.66 et avantageusement les canaux de liaison 22 présente(nt) des sections transversales internes différentiées selon les différentes zones du caloduc (évaporateur $Z_E$, zone adiabatique $Z_A$, condenseur $Z_C$).

Cette différentiation est bien visible en relation avec les figures 3A à 3D.

Ces figures 3A à 3D montrent un caloduc selon l'invention comprenant des canaux liquides uniquement sur un côté longitudinal de l'enceinte étanche 2.

Les figures 3A et 3B montrent l'évaporateur du caloduc : il comprend un nombre de six canaux liquides 21.1, 21.2, 21.3, 21.4, 21.5 21.6 de section transversale identique entre eux à une côte donnée selon l'axe X, mais qui évolue progressivement depuis la première extrémité longitudinale 3 jusque la zone adiabatique $Z_A$.

Plus précisément, chacun des six canaux liquides 21.1 à 21.6 présente une section transversale dans le plan YZ qui augmente depuis la première extrémité longitudinale 3 (figure 3A) jusqu'à sa limite avec la zone adiabatique (figure 3B). Autrement dit, l'épaisseur des parois séparant les six canaux liquides 21.1 à 21.6 diminue depuis la première extrémité longitudinale 3 (figure 3A) jusqu'à sa limite avec la zone adiabatique (figure 3B). En outre, la hauteur du canal liquide selon l'axe Y augmente depuis l'extrémité longitudinale 3 jusqu' à la zone adiabatique.

La figure 3C montre la zone adiabatique du caloduc : elle comprend un unique canal liquide 21 de section transversale identique sur toute sa longueur selon l'axe X, à ceci près que des piliers raidisseurs 23 qui s'étendent selon la direction Y, sont agencés à différents endroits. Ces raidisseurs 23 sont présents localement pour des raisons de mise en forme et de résistance mécanique de l'enceinte 2 au niveau de la zone adiabatique. Ces raidisseurs 23 peuvent induire des pertes de charge qui sont minimes.

En outre, dans la zone adiabatique, on peut s'affranchir de tout canal de liaison 22 comme mieux détaillé par la suite.

La figure 3D montre le condenseur du caloduc : il comprend un nombre de six canaux liquides 21.1, 21.2, 21.3, 21.4, 21.5 21.6 de section transversale identique entre eux à une côte donnée selon l'axe X, mais qui peut évoluer progressivement depuis la zone adiabatique $Z_A$ jusque la deuxième extrémité longitudinale 4.

Pour mettre en exergue les différentes améliorations apportées par les modifications de design selon l'invention, les inventeurs ont fait plusieurs simulations numériques comparatives par rapport à un caloduc de référence, c'est-à-dire réalisé conformément à la demande de brevet EP3553445. On précise ici que les différents calculs numériques ont été réalisés avec un modèle analytique codé avec le progiciel commercialisé sous la dénomination « EES », ou « Engineering Equation Solver ».

Les caractéristiques de ce caloduc de référence sont synthétisées dans le tableau 1 suivant. [Tableau 1]

## TABLEAU 1

| Caractéristiques caloduc de référence | |
|---|---|
| Canaux liquides 21 | sur chacune de deux faces longitudinales opposées |
| Nombre de canaux liquides | 12 |
| Longueur des canaux liquides 21 selon axe Y | 1.4mm |
| Hauteur des canaux liquides 21 selon axe Z | 1.2mm |

(suite)

| Caractéristiques caloduc de référence | |
|---|---|
| Canaux liquides 21 | sur chacune de deux faces longitudinales opposées |
| Longueur du canal de liaison 22 selon axe Y | 1mm |
| Hauteur du canal de liaison 22 selon axe Z | 0.2mm |
| Longueur du canal vapeur | 4.4mm |
| Hauteur du canal vapeur 20 selon axe Z | 9.7mm |
| Epaisseur des parois entre canaux liquides 21 selon axe Z | 0.5mm |
| Longueur de l'évaporateur $Z_E$ selon axe X | 20cm |
| Longueur de la zone adiabatique $Z_A$ selon axe X | 80cm |
| Longueur du condenseur $Z_C$ selon axe X | 20cm |
| Longueur totale du caloduc selon axe X | 1.2m |
| Longueur effective du caloduc selon axe X | 1m |

Une première modification du design de caloduc consiste à ne mettre des canaux liquides que sur une seule face longitudinale, par exemple la face 11 d'un caloduc.

Cette première modification permet, pour une section de caloduc constante, d'agrandir les canaux liquides 21, et ainsi de réduire les pertes de charge dans ceux-ci.

L'impact de cette première modification sur la limite capillaire est présenté en figure 4, étant précisé que le caloduc selon l'invention à six canaux liquides 21 sur une seule face longitudinale présente par ailleurs toutes les autres caractéristiques du caloduc de référence, mentionnées dans le tableau 1.

Il ressort clairement de la figure 4 que, quelle que soit la température, la limite capillaire est supérieure pour un caloduc avec des canaux liquides 21 sur une seule face longitudinale.

Une deuxième modification de design de caloduc concerne la zone adiabatique $Z_A$ déjà montrée en figure 3C et illustrée en figures 5 et 6.

Cette deuxième modification consiste à supprimer partiellement totalement ou les parois entre canaux liquides 21.1 à 21.6 dans la zone adiabatique $Z_A$ ou autrement dit à réduire le nombre de canaux liquides dans cette zone.

Dans l'exemple illustré, la zone adiabatique $Z_A$ comprend un unique canal liquide 21.

Cette deuxième modification permet de réduire les pertes de charge dans la zone adiabatique, qui est la partie du caloduc la plus longue, et donc la plus contributrice aux pertes de charge, et donc d'améliorer la limite capillaire.

Comme déjà indiqué, des raidisseurs 23 qui s'étendent sur la hauteur du canal liquide 21, c'est-à-dire selon l'axe Z peuvent être réalisés ponctuellement.

Également, il n'est pas nécessaire de maintenir le canal de liaison 22 entre liquide et vapeur dans la zone adiabatique. Il peut donc être supprimé dans cette zone, comme symbolisé par la zone de continuité de matière 24 en figure 6. Ainsi, toutes les plaques 10 de l'empilement peuvent être jointives dans la zone adiabatique $Z_A$, par exemple en étant brasées entre elles en délimitant une paroi étanche continue entre le canal vapeur 20 et le canal liquide 21. Cela a pour avantage de renforcer mécaniquement le caloduc dans la zone adiabatique $Z_A$.

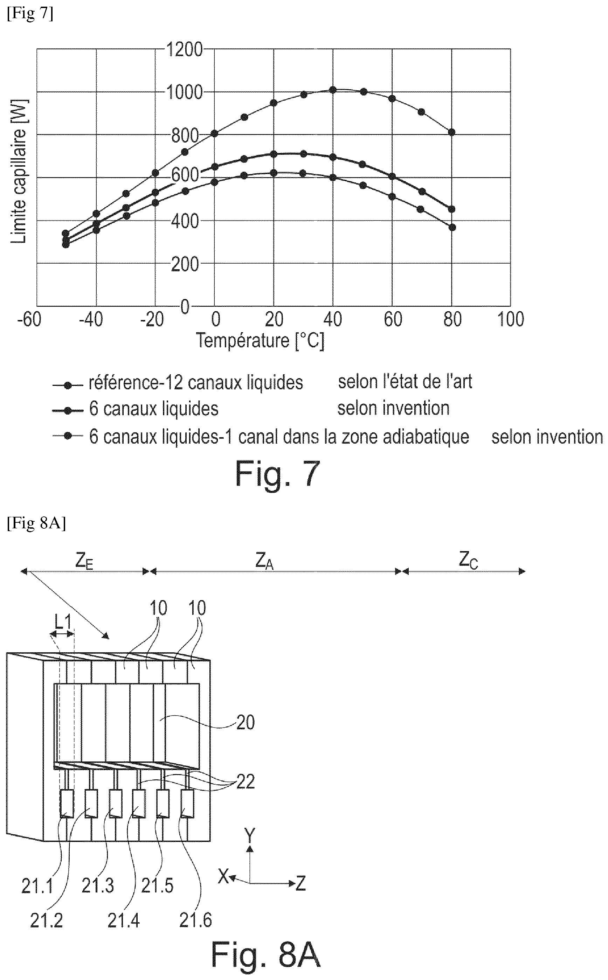

Les courbes de la figure 7 illustrent l'augmentation de la limite capillaire obtenue grâce à cette deuxième modification. On précise ici que l'impact des raidisseurs n'a pas été calculé.

Il ressort clairement de ces courbes que plus la température d'opération est élevée, et plus le gain de limite capillaire selon cette deuxième modification est élevé, jusqu'à +100% au-delà de 60°C par rapport à un caloduc de référence.

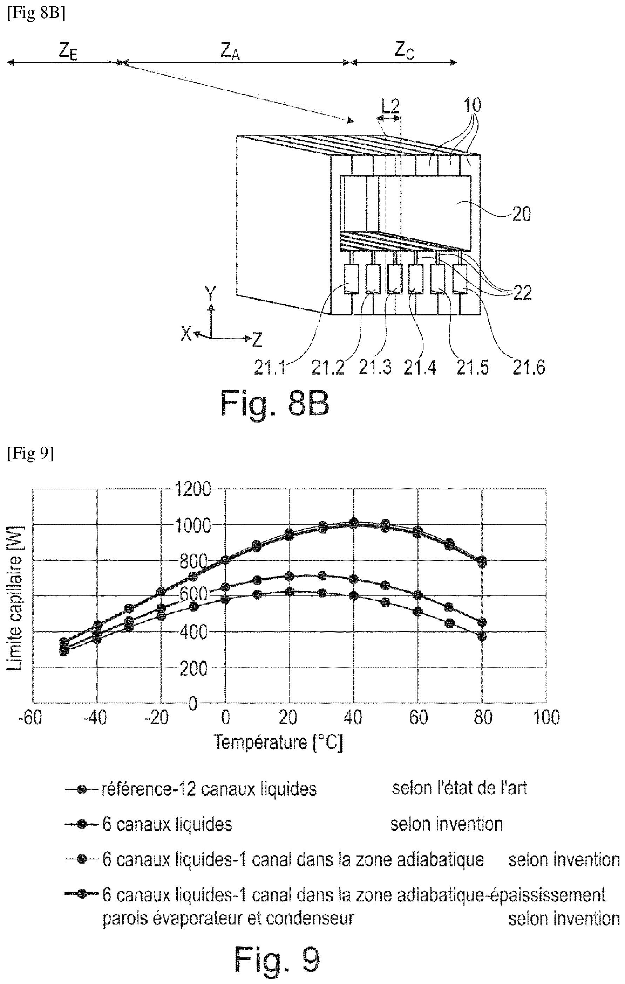

Une troisième modification consiste à épaissir les parois entre canaux liquides 21.1 à 21.6 dans l'évaporateur $Z_E$, déjà montrée en figures 3A et 3B et illustrée en figures 8A et 8B.

Cette troisième modification de design permet d'améliorer la conductance du caloduc au niveau de l'évaporateur et, donc la conductance totale, en améliorant le chemin thermique entre source chaude et fluide. Cela permet de repousser l'apparition de la limite d'ébullition.

Cette troisième modification a en outre pour conséquence de réduire la section de l'écoulement liquide dans l'évaporateur, et donc augmenter sa vitesse, ce qui augmente les pertes de charge (effet négatif sur la limite capillaire), mais a l'avantage de repousser l'apparition des bulles (effet positif sur la limite d'ébullition).

Cet épaississement peut être identique sur toute la longueur, ou être progressif. L'épaississement progressif a pour intérêt d'ajuster la section de l'écoulement liquide au débit liquide, celui-ci augmentant depuis la première extrémité longitudinale 3 du caloduc jusqu'à la fin de l'évaporateur $Z_E$.

Comme montré sur les courbes de la figure 9, l'impact de cette modification sur la limite capillaire est limité, puisqu'entre 0,3% et 2,4%, car les zones dans lesquelles les canaux liquides sont les plus réduits sont celles où le débit liquide est le plus faible, et donc les pertes de charge dans ces zones sont faibles.

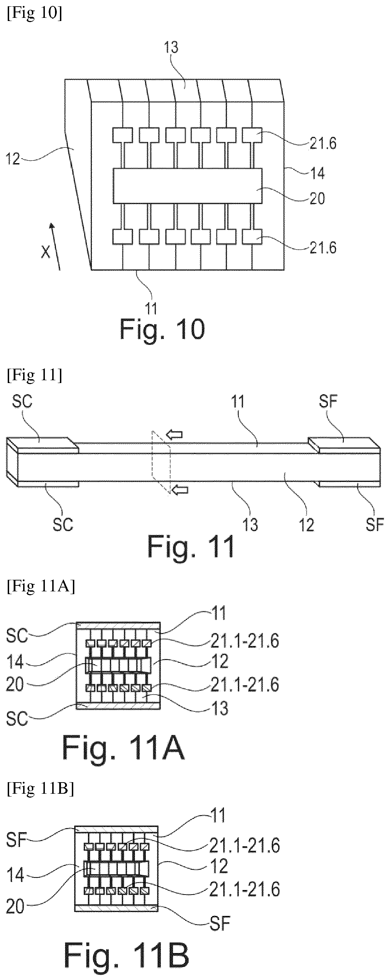

La figure 10 montre une variante d'exemple de caloduc selon l'invention, selon laquelle les canaux liquides 21.1, 21.2, 21.3, 21.4, 21.5 21.6 sont agencés sur deux faces longitudinales 11, 13 opposées du caloduc, c'est-à-dire en regard l'une de l'autre.

Différentes configurations de position des canaux liquides dans le caloduc et par rapport aux sources froides SF et chaudes SC peuvent être envisagées dans le cadre de l'invention :

- les figures 11, 11A et 11B montrent un agencement de canaux liquides sur deux faces longitudinales opposées 11, 13 avec les flux de source de chaleur qui arrivent directement en contact avec celles-ci à l'évaporateur et l'extraction par la source froide également en contact avec celles-ci au condenseur;

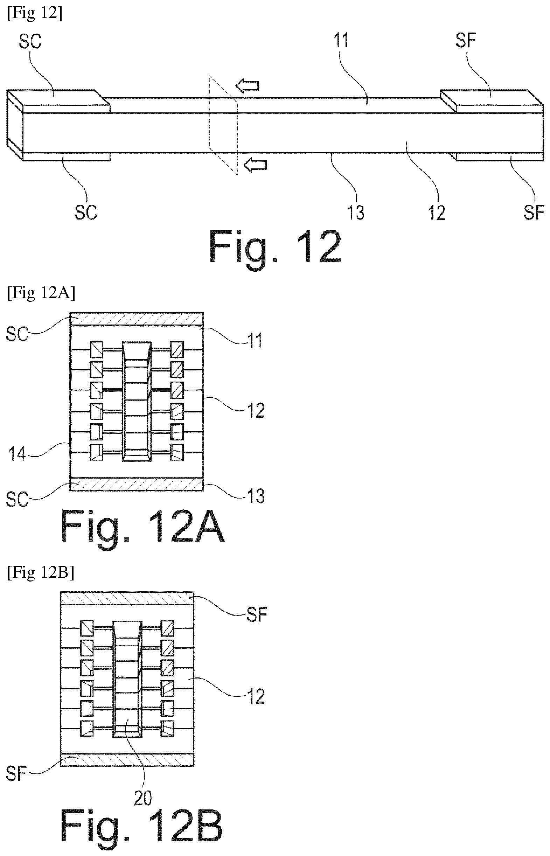

- les figures 12, 12A et 12B montrent un agencement de canaux liquides sur deux faces longitudinales opposées 12, 14 avec les flux de source de chaleur qui arrivent sur les faces 11, 13 orthogonales à celles-ci à l'évaporateur et l'extraction par la source froide également par les faces 11, 13 orthogonales à celles-ci au condenseur;

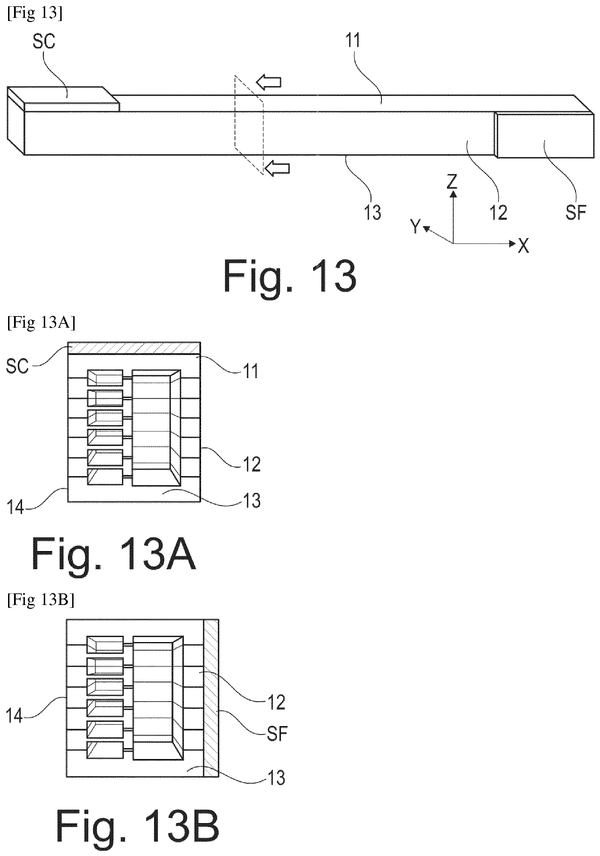

- les figures 13, 13A et 13B montrent un agencement de canaux liquides sur une seule face longitudinale 14 avec le flux de source de chaleur qui arrive sur une seule face 11 orthogonale à celles-ci à l'évaporateur et l'extraction par la source froide également par une seule face 12 en regard de celle-ci au condenseur;

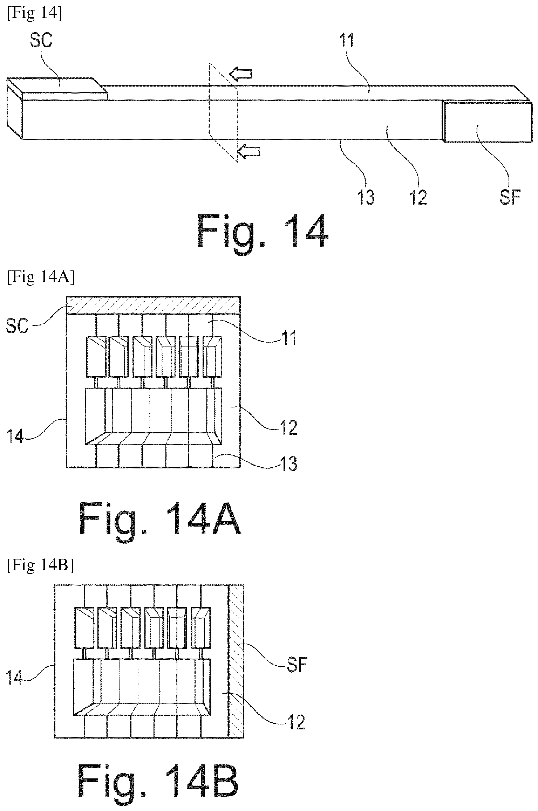

- les figures 14, 14A et 14B montrent un agencement de canaux liquides sur une seule face longitudinale 11 avec le flux de source de chaleur qui arrive directement sur cette face 11 à l'évaporateur et l'extraction par la source froide également par une seule face 12 orthogonale à celle-ci au condenseur;

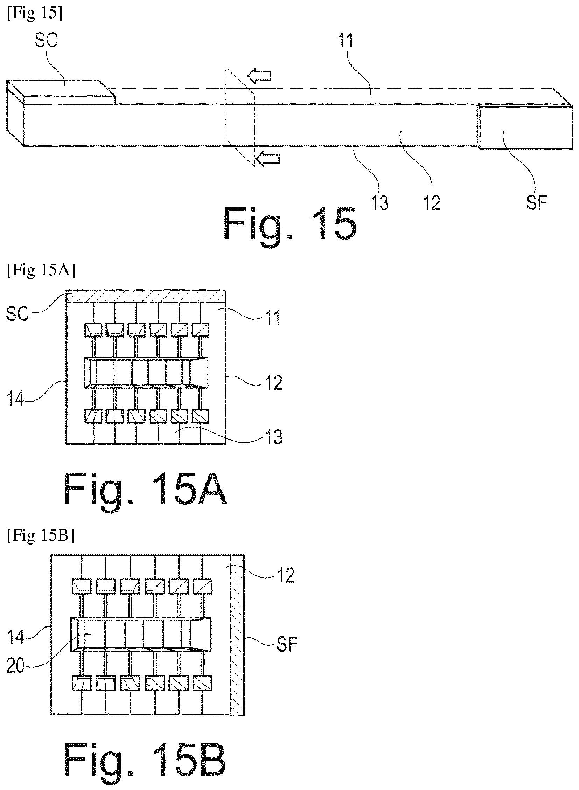

- les figures 15, 15A et 15B montrent un agencement de canaux liquides sur deux faces longitudinales opposées 11, 13 avec le flux de source de chaleur qui arrive directement en contact avec une seule de ces faces 11 à l'évaporateur et l'extraction par la source froide également par une seule face 12 orthogonale au condenseur;

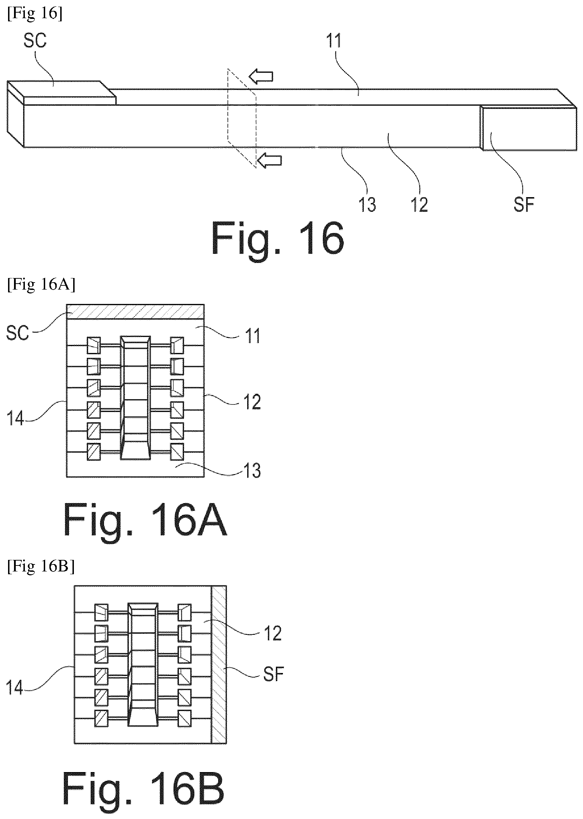

- les figures 16, 16A et 16B montrent un agencement de canaux liquides sur deux faces longitudinales opposées 12, 14 avec le flux de source de chaleur qui arrive sur une seule face 11 orthogonale à celles-ci à l'évaporateur et l'extraction par la source froide par une des deux faces 11, 13 orthogonales à celles-ci au condenseur.

D'autres avantages et améliorations pourront être apportées sans pour autant sortir du cadre de l'invention.

Par exemple, un caloduc selon l'invention peut comporter un nombre plus, ou moins important de canaux liquides que six par face longitudinale à l'évaporateur et au condenseur et un unique canal liquide dans la zone adiabatique.

L'invention n'est pas limitée aux exemples qui viennent d'être décrits; on peut notamment combiner entre elles des caractéristiques des exemples illustrés au sein de variantes non illustrées.

Un caloduc est rempli d'un fluide diphasique, il peut s'agir d'un fluide bien connu de l'homme du métier. Celui-ci est choisi par exemple en fonction de la gamme de température de fonctionnement et de stockage du dispositif, en fonction des contraintes dues à la pression, l'inflammabilité, la toxicité du fluide et de la compatibilité chimique entre le fluide et le matériau formant le caloduc.

A titre d'exemple, pour un caloduc réalisé en alliage d'aluminium assemblé par brasure eutectique, on peut utiliser comme fluide l'ammoniac, l'acétone, le méthanol, le n-heptane, le R134a ou autres fluides frigorigènes fluorés.

**Liste des références citées**

[1]: Christine Hoa : «Thermique des caloducs à rainures axiales : études et réalisations pour des applications spatiales». Université de Poitiers, 2004.

[2]: C. Zhang, Y. Chen, M. Shi and G. Peterson: « Optimization of heat pipe with axial omega-shaped micro grooves based on a niched pareto genetic algorithm (npga) », Appl. Therm. Eng. 29(16) 3340-3345 (2009).

[3]: G. Nagayama, S. Gyotoku, T. Tsuruta: « Thermal performance of flat micro heat pipe with converging microchannels », Int. J. Heat MasS Transfer, 122: 375-382 (2018).

[4]: M. Singh: « Capillarity enhancement of micro heat pipes using grooves with variable apex angle», Int. J. Thermal Sciences 150: 106239 (2020).

[5]: W. Wu and G. Peterson: « Investigation of the transient characteristics of a micro heat pipe », J. Thermophys. 5(2):

129-134 (1991).

[6]: B. Herrera, F. Chejne, M. Mantelli, J. Mejia, K. Cacua, A. Gallego: « Population balance for capillary limit modeling in a screen mesh wick heat pipe working with nanofluids », Int. J. Thermal Sciences 138: 134-158 (2019).

[7]: M. Singh, N.V. Datla, S. Kondaraju, S. Singh Bahga, « Enhanced thermal performance of micro heat pipes through optimization of wettability gradient », Appl. Therm. Eng. 143: 350-357 (2018).

[8]: M. Hamidnia, Y. Luo, Z. Li, X. Wang: « Capillary and thermal performance enhancement of rectangular grooved micro heat pipe with micro pillars », Int. J. Heat Mass Transfer 153: 119581 (2020).

[9]: M.C. Vlachou, J.S. Lioumbas, K. David, D. Chasapis, T.D. Karapantsios, « Effect of channel height and mass flux on highly subcooled horizontal flow boiling », Exp. Therm. Fluid Sci. 83: 157-168 (2017).

[10]: K.R. Balasubramanian, R.A. Krishnan, S. Suresh, « Spatial orientation effects on flow boiling performances in open microchannels heat sink configuration under a wide range of mass fluxes », Exp. Therm. Fluid Sci. 99: 392-406 (2018).

[11]: R.K. Bumataria, N.K. Chavda and H. Panchal, «Current research aspects in mono and hybrid nanofluid based heat pipe technologies», Heliyon 5: e01627 (2019).

[12]: N.K. Gupta, A.K. Tiwari, S.K. Ghosh, «Heat transfer mechanisms in heat pipes using nanofluids» - A review, Exp. Therm. Fluid Sci. 90: 84-100 (2018).

## Revendications

1. Caloduc à rainures réentrantes, s'étendant le long d'une première direction longitudinale (X), comprenant une enceinte étanche (2) s'étendant entre une première extrémité longitudinale (4), destinée à être échauffée par une source chaude SC pour former, au sein de l'enceinte, un évaporateur et une deuxième extrémité longitudinale (6) destinée à être refroidie par une source froide SF pour former, au sein de l'enceinte, un condenseur, l'enceinte étanche délimitant une zone adiabatique entre l'évaporateur et le condenseur, l'enceinte comprenant un empilement de plaques selon une deuxième direction (Z) orthogonale à la première direction (X), l'empilement comprenant deux plaques de fermeture, au moins un nombre de n modules les uns sur les autres avec n étant un entier > 1, chaque module comprenant au moins une plaque intercalaire entre les plaques de fermeture (12), la ou les plaques intercalaires comprenant au moins une première plaque intercalaire (10) comportant au moins une fenêtre dont les bords délimitent en partie un canal vapeur (20) s'étendant le long de la première direction (X) entre l'évaporateur et le condenseur, dans lequel la vapeur est destinée à circuler, et sur au moins un côté latéral de la fenêtre selon une troisième direction (Y) orthogonale aux première (X) et deuxième (Z) directions, au moins une structuration dont les bords délimitent en partie un canal liquide dans l'évaporateur et le condenseur, au moins une plaque intercalaire comportant au moins une fenêtre dont les bords délimitent en partie le canal vapeur (20), au moins la première plaque intercalaire délimitant un canal de liaison reliant le canal vapeur et le canal liquide au moins dans l'évaporateur et le condenseur, **caractérisé en ce que** les structurations et plaques intercalaires des n modules définiss ent un canal vapeur unique et sur, le au moins un côté latéral du canal vapeur, n canaux liquides dans l'évaporateur et le condenseur mais un nombre de canal(ux) liquide(s) inférieur à n dans la zone adiabatique ($Z_A$).

2. Caloduc à rainures réentrantes selon la revendication 1, les structurations et plaques intercalaires des n modules définissant un unique canal liquide dans la zone adiabatique ($Z_A$).

3. Caloduc à rainures réentrantes selon la revendication 1 ou 2, comprenant des montants qui s'étendent dans la deuxième direction (Y) sur toute la hauteur du ou des canaux liquides dans la zone adiabatique (A), de sorte à constituer des piliers raidisseurs.

4. Caloduc à rainures réentrantes selon l'une des revendications précédentes, comprenant un nombre de canal(ux) de liaison inférieur à n dans la zone adiabatique ($Z_A$).

5. Caloduc à rainures réentrantes selon la revendication 4, aucun canal de liaison n'étant délimité dans la zone adiabatique.

**6.** Caloduc à rainures réentrantes selon l'une des revendications précédentes, les structurations étant seulement d'un côté latéral de la fenêtre délimitant le canal vapeur.

**7.** Caloduc à rainures réentrantes selon l'une des revendications 1 à 5, les structurations étant sur chacun de deux côtés latéraux de la fenêtre, en regard l'un de l'autre.

**8.** Caloduc à rainures réentrantes selon l'une des revendications précédentes, la section transversale dans un plan YZ du canal vapeur, de préférence rectangulaire, étant constante sur toute la longueur X du caloduc.

**9.** Caloduc à rainures réentrantes selon l'une des revendications précédentes, les parois entre canaux liquides étant d'épaisseur progressivement augmentée dans l'évaporateur, depuis la zone adiabatique.

**10.** Caloduc à rainures réentrantes selon l'une des revendications précédentes, les canaux de liaison ayant une hauteur selon la direction Y progressivement augmentée dans l'évaporateur.

**11.** Caloduc à rainures réentrantes selon l'une des revendications précédentes, les parois entre canaux liquides étant d'épaisseur progressivement augmentée dans le condenseur, depuis la zone adiabatique.

**12.** Système comprenant :

- une source froide (SF) ;
- une source chaude (SC) et
- au moins un caloduc à rainures réentrantes selon l'une des revendications précédentes, le caloduc étant agencé de sorte que le flux de chaleur de la source chaude (SC) sur l'évaporateur, et l'extraction de chaleur au condenseur vers la source froide (SF) étant sur au moins une face latérale de l'enceinte en regard des canaux liquides, ou sur une face latérale perpendiculaire à ceux-ci.

**Patentansprüche**

**1.** Wärmerohr mit Wiedereintrittsrillen, das sich entlang einer ersten Längsrichtung (X) erstreckt und eine dichte Hülle (2) umfasst, die sich zwischen einem ersten Längsende (4), das dazu bestimmt ist, von einer Wärmequelle SC erwärmt zu werden, um im Inneren der Hülle einen Verdampfer zu bilden, und einem zweiten Längsende (6), das dazu bestimmt ist, von einer Kältequelle SF gekühlt zu werden, um im Inneren der Hülle einen Kondensator zu bilden, erstreckt, wobei die dichte Hülle einen adiabaten Bereich zwischen dem Verdampfer und dem Kondensator begrenzt, wobei die Hülle einen Stapel von Platten entlang einer zu der ersten Richtung (X) orthogonalen zweiten Richtung (Z) umfasst, wobei der Stapel zwei Verschlussplatten, mindestens eine Anzahl von n Modulen übereinander umfasst, wobei n eine ganze Zahl >1 ist, wobei jedes Modul mindestens eine Zwischenplatte zwischen den Verschlussplatten (12) umfasst, wobei die Zwischenplatte(n) mindestens eine erste Zwischenplatte (10) umfassen, die mindestens ein Fenster aufweist, dessen Ränder einen sich entlang der ersten Richtung (X) zwischen dem Verdampfer und dem Kondensator erstreckenden Dampfkanal (20) teilweise begrenzen, in dem der Dampf strömen soll, und auf mindestens einer lateralen Seite des Fensters entlang einer zu der ersten (X) und der zweiten (Z) Richtung orthogonalen dritten Richtung (Y) mindestens eine Strukturierung, deren Ränder einen Flüssigkeitskanal in dem Verdampfer und dem Kondensator teilweise begrenzen, wobei mindestens eine Zwischenplatte mindestens ein Fenster aufweist, dessen Ränder den Dampfkanal (20) teilweise begrenzen, wobei mindestens die erste Zwischenplatte einen Verbindungskanal begrenzt, der den Dampfkanal und den Flüssigkeitskanal mindestens in dem Verdampfer und dem Kondensator verbindet, **dadurch gekennzeichnet, dass** die Strukturierungen und Zwischenplatten der n Module einen einzigen Dampfkanal und auf der mindestens einen lateralen Seite des Dampfkanals n Flüssigkeitskanäle in dem Verdampfer und dem Kondensator definieren, aber eine Anzahl von Flüssigkeitskanälen kleiner als n in dem adiabaten Bereich ($Z_A$).

**2.** Wärmerohr mit Wiedereintrittsrillen nach Anspruch 1, wobei die Strukturierungen und Zwischenplatten der n Module einen einzigen Flüssigkeitskanal in dem adiabaten Bereich ($Z_A$) definieren.

**3.** Wärmerohr mit Wiedereintrittsrillen nach Anspruch 1 oder 2, das Streben umfasst, die sich in der zweiten Richtung (Y) über die gesamte Höhe des oder der Flüssigkeitskanäle in dem adiabaten Bereich (A) erstrecken, um Versteifungssäulen zu bilden.

**4.** Wärmerohr mit Wiedereintrittsrillen nach einem der vorhergehenden Ansprüche, das eine Anzahl von Flüssigkeitskanälen kleiner als n in dem adiabaten Bereich ($Z_A$) umfasst.

**5.** Wärmerohr mit Wiedereintrittsrillen nach Anspruch 4, wobei kein Verbindungskanal in dem adiabaten Bereich begrenzt wird.

**6.** Wärmerohr mit Wiedereintrittsrillen nach einem der vorhergehenden Ansprüche, wobei die Strukturierungen nur auf einer lateralen Seite des Fensters sind, das den Dampfkanal begrenzt.

**7.** Wärmerohr mit Wiedereintrittsrillen nach einem der Ansprüche 1 bis 5, wobei die Strukturierungen auf jeder der beiden lateralen Seiten des Fensters sind, einander gegenüber liegend.

**8.** Wärmerohr mit Wiedereintrittsrillen nach einem der vorhergehenden Ansprüche, wobei der Querschnitt in einer Ebene YZ des Dampfkanals, der bevorzugt rechteckig ist, über die gesamte Länge X des Wärmerohrs konstant ist.

**9.** Wärmerohr mit Wiedereintrittsrillen nach einem der vorhergehenden Ansprüche, wobei die Wände zwischen Flüssigkeitskanälen in dem Verdampfer von progressiv zunehmender Dicke von dem adiabaten Bereich aus sind.

**10.** Wärmerohr mit Wiedereintrittsrillen nach einem der vorhergehenden Ansprüche, wobei die Verbindungskanäle eine entlang der Richtung Y progressiv zunehmende Höhe in dem Verdampfer haben.

**11.** Wärmerohr mit Wiedereintrittsrillen nach einem der vorhergehenden Ansprüche, wobei die Wände zwischen Flüssigkeitskanälen in dem Kondensator von progressiv zunehmender Dicke von dem adiabaten Bereich aus sind.

**12.** System, umfassend:

- eine Kältequelle (SF);
- eine Wärmequelle (SC) und
- mindestens ein Wärmerohr mit Wiedereintrittsrillen nach einem der vorhergehenden Ansprüche, wobei das Wärmerohr so ausgebildet ist, dass der Wärmefluss der Wärmequelle (SC) am Verdampfer und die Extraktion von Wärme am Kondensator zu der Kältequelle (SF) hin auf mindestens einer lateralen Fläche der Hülle gegenüber den Flüssigkeitskanälen oder auf einer zu diesen senkrechten lateralen Fläche erfolgt.

**Claims**

**1.** Heat pipe with reentrant grooves, extending in a first longitudinal direction (X), comprising a sealed enclosure (2) extending between a first longitudinal end (4) intended to be heated by a hot source SC to form, within the enclosure, an evaporator and a second longitudinal end (6) intended to be cooled by a cold source SF to form, within the enclosure, a condenser, the sealed enclosure delimiting an adiabatic zone between the evaporator and the condenser, the enclosure comprising a stack of plates in a second direction (Z), orthogonal to the first direction (X), the stack comprising two closing plates, at least a number n of modules on top of each other where n is an integer > 1, each module comprising at least one intermediate plate between the closing plates (12), the intermediate plate or plates comprising at least one first intermediate plate (10) including at least one window, the edges of which partially delimit a vapour channel (20) extending in the first direction (X) between the evaporator and the condenser, in which the vapour is intended to flow, and on at least one lateral side of the window in a third direction (Y) orthogonal to the first direction (X) and the second direction (Z), at least one structure with edges that partially delimit a liquid channel in the evaporator and the condenser, at least one intermediate plate including at least one window, the edges of which partially delimit the vapour channel (20), at least the first intermediate plate delimiting a connecting channel connecting the vapour channel and the liquid channel at least in the evaporator and the condenser, **characterized in that** the structures and intermediate plates of the n modules define a single vapour channel and, on the at least one lateral side of the vapour channel, n liquid channels in the evaporator and the condenser, but fewer than n liquid channels in the adiabatic zone ($Z_A$).

**2.** Heat pipe with reentrant grooves according to Claim 1, wherein the structures and intermediate plates of the n modules define a single liquid channel in the adiabatic zone ($Z_A$).

**3.** Heat pipe with reentrant grooves according to Claim 1 or 2, comprising uprights which extend in the second direction (Y) over the entire height of the liquid channel or channels in the adiabatic zone (A), to constitute stiffening pillars.

4. Heat pipe with reentrant grooves according to one of the preceding claims, comprising fewer than n connecting channels in the adiabatic zone ($Z_A$).

5. Heat pipe with reentrant grooves according to Claim 4, wherein no connecting channel is delimited in the adiabatic zone.

6. Heat pipe with reentrant grooves according to one of the preceding claims, wherein the structures are only on one lateral side of the window delimiting the vapour channel.

7. Heat pipe with reentrant grooves according to one of Claims 1 to 5, wherein the structures are on each of two lateral sides of the window, facing each other.

8. Heat pipe with re-entrant grooves according to one of the preceding claims, wherein the cross section in a plane YZ of the vapour channel, preferably rectangular, is constant over the entire length X of the heat pipe.

9. Heat pipe with reentrant grooves according to one of the preceding claims, wherein the thickness of the walls between liquid channels increases gradually in the evaporator, from the adiabatic zone.

10. Heat pipe with reentrant grooves according to one of the preceding claims, wherein a height of the connecting channels in the direction Y increases gradually in the evaporator.

11. Heat pipe with reentrant grooves according to one of the preceding claims, wherein the thickness of the walls between liquid channels increases gradually in the condenser, from the adiabatic zone.

12. System comprising:

   - a cold source (SF);
   - a hot source (SC); and
   - at least one heat pipe with reentrant grooves according to one of the preceding claims, wherein the heat pipe is arranged so that the heat flow from the hot source (SC) to the evaporator, and the extraction of heat at the condenser to the cold source (SF) occur on at least one lateral face of the enclosure facing the liquid channels, or on a lateral face perpendicular to them.

[Fig 1]

P

T=Température Vapeur [K]
P=Puissances Transférées Maximales [W]

$Q_{entrainement}$

$Q_{sonique}$

$Q_{capillaire}$

$Q_{visqueuse}$

Domaine de fonctionnement

$Q_{ébullition}$

$T_{triple}$

$T_{critique}$

T

# Fig. 1

[Fig 2]

$Z_E$

$Z_A$

$Z_C$

$\dot{m}$

X

$A_\ell$

X

$v_\ell$

X

# Fig. 2

[Fig 3]

Fig. 3

[Fig 3A]

Fig. 3A

[Fig 3B]

Fig. 3B

[Fig 3C]

Fig. 3C

[Fig 3D]

Fig. 3D

[Fig 4]

—•— référence-12 canaux liquides    —•— 6 canaux liquides
Selon l'état de l'art              selon invention

Fig. 4

[Fig 5]

Fig. 5

[Fig 6]

Fig. 6

[Fig 7]

—•— référence-12 canaux liquides     selon l'état de l'art

—•— 6 canaux liquides     selon invention

—•— 6 canaux liquides-1 canal dans la zone adiabatique     selon invention

# Fig. 7

[Fig 8A]

# Fig. 8A

[Fig 8B]

Fig. 8B

[Fig 9]

—●—référence-12 canaux liquides    selon l'état de l'art

—●—6 canaux liquides    selon invention

—●—6 canaux liquides-1 canal dans la zone adiabatique    selon invention

—●—6 canaux liquides-1 canal dans la zone adiabatique-épaississement parois évaporateur et condenseur    selon invention

Fig. 9

[Fig 10]

Fig. 10

[Fig 11]

Fig. 11

[Fig 11A]

Fig. 11A

[Fig 11B]

Fig. 11B

[Fig 12]

SC          11          SF

SC          13    12    SF

# Fig. 12

[Fig 12A]

SC          11

          12

14

SC          13

# Fig. 12A

[Fig 12B]

          SF

          12

SF

20

# Fig. 12B

[Fig 13]

Fig. 13

[Fig 13A]

Fig. 13A

[Fig 13B]

Fig. 13B

[Fig 14]

Fig. 14

[Fig 14A]

Fig. 14A

[Fig 14B]

Fig. 14B

EP 4 419 856 B1

[Fig 15]

SC                    11

Fig. 15    13  12  SF

[Fig 15A]

SC
14                    11
                      12
                      13

Fig. 15A

[Fig 15B]

                      12
14
20                    SF

Fig. 15B

25

[Fig 16]

Fig. 16

[Fig 16A]

Fig. 16A

[Fig 16B]

Fig. 16B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 3553445 A1

- EP 3553445 A

### Littérature non-brevet citée dans la description

- **CHRISTINE HOA**. Thermique des caloducs à rainures axiales : études et réalisations pour des applications spatiales. *Université de Poitiers*, 2004
- **C. ZHANG** ; **Y. CHEN** ; **M. SHI** ; **G. PETERSON**. Optimization of heat pipe with axial omega-shaped micro grooves based on a niched pareto genetic algorithm (npga). *Appl. Therm. Eng.*, 2009, vol. 29 (16), 3340-3345
- **G. NAGAYAMA** ; **S. GYOTOKU** ; **T. TSURUTA**. Thermal performance of flat micro heat pipe with converging microchannels. *Int. J. Heat MasS Transfer*, 2018, vol. 122, 375-382
- **M. SINGH**. Capillarity enhancement of micro heat pipes using grooves with variable apex angle. *Int. J. Thermal Sciences*, 2020, vol. 150, 106239
- **W. WU** ; **G. PETERSON**. Investigation of the transient characteristics of a micro heat pipe. *J. Thermophys.*, 1991, vol. 5 (2), 129-134
- **B. HERRERA** ; **F. CHEJNE** ; **M. MANTELLI** ; **J. MEJIA** ; **K. CACUA** ; **A. GALLEGO**. Population balance for capillary limit modeling in a screen mesh wick heat pipe working with nanofluids. *Int. J. Thermal Sciences*, 2019, vol. 138, 134-158

- **M. SINGH** ; **N.V. DATLA** ; **S. KONDARAJU** ; **S. SINGH BAHGA**. Enhanced thermal performance of micro heat pipes through optimization of wettability gradient. *Appl. Therm. Eng.*, 2018, vol. 143, 350-357
- **M. HAMIDNIA** ; **Y. LUO** ; **Z. LI** ; **X. WANG**. Capillary and thermal performance enhancement of rectangular grooved micro heat pipe with micro pillars. *Int. J. Heat Mass Transfer*, 2020, vol. 153, 119581
- **M.C. VLACHOU** ; **J.S. LIOUMBAS** ; **K. DAVID** ; **D. CHASAPIS** ; **T.D. KARAPANTSIOS**. Effect of channel height and mass flux on highly subcooled horizontal flow boiling. *Exp. Therm. Fluid Sci*, 2017, vol. 83, 157-168
- **K.R. BALASUBRAMANIAN** ; **R.A. KRISHNAN** ; **S. SURESH**. Spatial orientation effects on flow boiling performances in open microchannels heat sink configuration under a wide range of mass fluxes. *Exp. Therm. Fluid Sci.*, 2018, vol. 99, 392-406
- **R.K. BUMATARIA** ; **N.K. CHAVDA** ; **H. PANCHAL**. Current research aspects in mono and hybrid nanofluid based heat pipe technologies. *Heliyon*, 2019, vol. 5, e01627
- **N.K. GUPTA** ; **A.K. TIWARI** ; **S.K. GHOSH**. Heat transfer mechanisms in heat pipes using nanofluids. *A review, Exp. Therm. Fluid Sci.*, 2018, vol. 90, 84-100